# EUROPÄISCHE PATENTANMELDUNG

(11) **EP 1 466 696 A1**
(43) Veröffentlichungstag der Anmeldung: **13.10.2004**
(21) Anmeldenummer: 04005877.8
(22) Anmeldetag: 11.03.2004
(51) Int. Cl.: B23Q 5/04, F16H 3/54, B23B 31/26

(54) **Spindelvorrichtung mit schaltbarem Getriebe und entsprechendes Verfahren**

(30) Priorität: 09.04.2003 DE 10316245
(71) Anmelder: SIEMENS AKTIENGESELLSCHAFT, 80333 München (DE)
(72) Erfinder: Herla, Max, 97520 Röthlein (DE)

(57) **Zusammenfassung**

Das Getriebe einer Motorspindel soll komfortabler geschaltet werden können. Dazu ist vorgesehen, dass eine Spindelkopfwelle (3) in einer ersten Getriebeposition über die Getriebeeinrichtung (4, 14, 15) von einer Antriebswelle (7) angetrieben wird. Aus dieser ersten Getriebeposition lässt sich die Antriebswelle (7) einschließlich eines Rotors (6) in eine zweite Getriebeposition schalten, in der die Spindelkopfwelle (3) mit der Antriebswelle (7) ohne Zwischenschaltung der Getriebeeinrichtung (4, 14, 15) unmittelbar kraftschlüssig verbunden ist. Dadurch kann die Spindelkopfwelle (3) in der zweiten Getriebeposition unmittelbar durch die Antriebswelle (7) angetrieben werden. Ein Demontieren einer Vorsatzspindel (1) von der Antriebseinheit (2) ist damit nicht notwendig.

## Beschreibung

Die vorliegende Erfindung betrifft eine Spindelvorrichtung für Werkzeugmaschinen mit einer Antriebseinrichtung, die eine Antriebswelle umfasst, einer Spindelkopfeinrichtung zur Aufnahme eines Werkzeugs, deren Spindelkopfwelle von der Antriebseinrichtung antreibbar ist, und einer Getriebeeinrichtung, die zwischen die Antriebseinrichtung und die Spindelkopfeinrichtung geschaltet ist. Ferner betrifft die vorliegende Erfindung ein Verfahren zum Betreiben einer Spindelvorrichtung für Werkzeugmaschinen durch Antreiben einer Spindelkopfwelle über eine Getriebeeinrichtung durch eine Antriebswelle.

Spindelvorrichtungen der genannten Art werden insbesondere für Motorfräsen eingesetzt. Üblicherweise besitzt eine einteilige oder teilbare Motorfrässpindel einen auf eine Antriebswelle aufgeschrumpften Rotor eines Elektromotors. Der Rotor wird zwischen zwei Lagerpaketen gelagert. Im Inneren der Welle bzw. der Wellen ist ein Werkzeugspannsystem, das üblicherweise aus einem Spannkopf, einer Zugstange und einem Tellerfederpaket besteht, angeordnet. Am Ende der Spindeleinheit ist eine Spannsystemabfrage an der Zugstange und ein Werkzeuglösekolben angebaut.

Bei gewissen Einsatzfällen von Motorspindeln ist es notwendig, ein höheres Drehmoment bereitzustellen, als der Elektromotor zur Verfügung stellen kann. Für diese Zwecke wird in der Regel zwischen den Elektromotor und den Spindelkopf ein zweistufiges Planetengetriebe geschaltet. Hierzu ist es günstig, wenn die Antriebseinheit von dem Spindelkopf- bzw. der Vorsatzfrässpindel abgekuppelt werden kann. Vorteilhafterweise kann dann bei Bedarf das Getriebe eingesetzt werden oder nicht. Es ist jedoch unkomfortabel, wenn zum Umschalten der Spindel auf eine höhere Drehgeschwindigkeit oder ein höheres Drehmoment die Vorsatzspindel von der Antriebseinheit abgenommen werden muss. Insbesondere muss dann auch die Zugstange für das Werkzeugspannsystem an der werkzeugabgewandten Seite der Antriebseinheit abmontiert werden. Eine derartige Motorfrässpindel ist nach internem Stand der Technik bekannt.

Eine übliche einteilige Bearbeitungsspindel ist aus der Deutschen Offenlegungsschrift DE 199 37 447 bekannt. In einer rotierend antreibbaren, hohlen Bearbeitungsspindel, die in einem Gehäuse gelagert ist, ist eine mit der Bearbeitungsspindel rotierende, axial verschiebliche Zugstange zum Spannen bzw. Lösen eines Werkzeugspanners angeordnet. Der Rotor des antreibenden Elektromotors ist auf die hohle Bearbeitungsspindel montiert.

Die Aufgabe der vorliegenden Erfindung besteht darin, eine Spindelvorrichtung für Werkzeugmaschinen vorzuschlagen, bei der das Drehmoment bzw. die Drehgeschwindigkeit der Spindel komfortabel variierbar ist. Ferner soll ein entsprechendes Verfahren zum Betreiben einer Spindelvorrichtung vorgeschlagen werden.

Erfindungsgemäß wird diese Aufgabe gelöst durch eine Spindelvorrichtung für Werkzeugmaschinen mit einer Antriebseinrichtung, die eine Antriebswelle umfasst, einer Spindelkopfeinrichtung, deren Spindelkopfwelle von der Antriebseinrichtung antreibbar ist, zur Aufnahme eines Werkzeugs und einer Getriebeeinrichtung, die zwischen die Antriebseinrichtung geschaltet ist, sowie einer Verschiebeeinrichtung, mit der die Antriebswelle axial derart verschiebbar ist, dass sie in einer ersten Position über die Getriebeeinrichtung mit der Spindelkopfwelle und in einer zweiten Position unmittelbar mit der Spindelkopfwelle kraftschlüssig verbunden ist.

Darüber hinaus ist erfindungsgemäß vorgesehen ein Verfahren zum Betreiben einer Spindelvorrichtung für Werkzeugmaschinen durch Antreiben einer Spindelkopfwelle über eine Getriebeeinrichtung durch eine Antriebswelle, die sich axial in einer ersten Position befindet, axiales Verschieben der Antriebswelle in eine zweite Position, in der die Spindelkopfwelle mit der Antriebswelle ohne Zwischenschaltung der Getriebeeinrichtung unmittelbar kraftschlüssig verbunden ist, und Antreiben der Spindelkopfwelle unmittelbar durch die Antriebswelle in der zweiten Position.

Das Verschieben der gesamten Antriebswelle hat den Vorteil, dass erfindungsgemäß keine weitere Schaltmechanik notwendig ist. Vielmehr genügt eine axial verschiebbare Lagerung der Antriebswelle.

Vorzugsweise umfasst die Getriebeeinrichtung ein Planetengetriebe. Mit Hilfe dieses Planetengetriebes kann das Drehmoment, das auf das Werkzeug übertragen wird, erhöht werden.

Die Antriebseinrichtung kann einen Elektromotor aufweisen, dessen Rotor auf die Antriebswelle montiert, insbesondere geschrumpft ist. Dabei sollte der Stator des Elektromotors den Rotor in der ersten und zweiten Position der Antriebswelle vollständig umgeben. Somit kann gewährleistet werden, dass auch bei Verschiebung des Rotors mit der Antriebswelle eine genügende magnetische Wechselwirkung mit dem Stator stattfindet.

Vorteilhafterweise ist die Spindelkopfeinrichtung von der Antriebseinrichtung abnehmbar. Damit können unterschiedliche Spindelköpfe bzw. Vorsatzspindeln mit unterschiedlichen Werkzeugspannern verwendet werden.

Die Antriebswelle kann in Lagerhülsen gelagert werden, die axial verschiebbar sind. Damit kann die aus thermischen Gründen vielfach notwendige Lagerung in Lagerhülsen beibehalten werden.

Die Verschiebeeinrichtung kann nach einem hydraulischen, pneumatischen oder elektromechanischen Prinzip arbeiten. Vorteilhaft ist insbesondere ein hydraulisches Verschieben, da die Lagerbüchsen üblicherweise ohnehin hydraulisch vorgespannt werden.

Die vorliegende Erfindung wird nun anhand der beigefügten Zeichnungen näher erläutert, in denen zeigen:
- FIG 1: eine Querschnittsansicht einer erfindungsgemäßen, geteilten Motorspindel mit Getriebe;
- FIG 2: eine Querschnittsansicht einer Motorspindel in einer ersten Getriebeschaltstellung; und
- FIG 3: eine Querschnittsansicht durch eine Motorspindel in einer zweiten Getriebeschaltstellung.

Die nachfolgend näher beschriebenen Ausführungsbeispiele stellen bevorzugte Ausführungsformen der vorliegenden Erfindung dar.

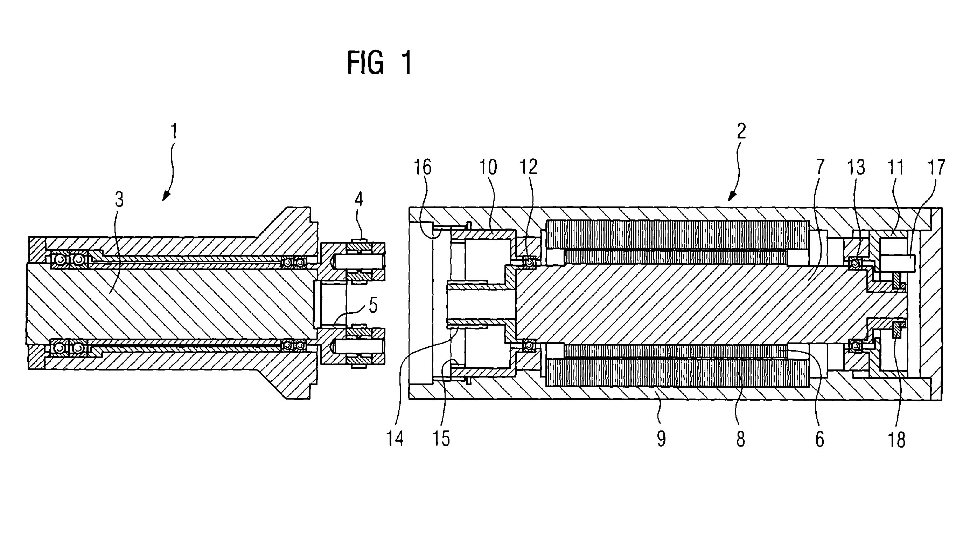

Die in FIG 1 vereinfacht dargestellte Motorfrässpindel besteht aus einer Spindelkopfeinrichtung bzw. Vorsatzspindel 1 und einer Antriebseinrichtung 2. Beide Komponenten sind in der Zeichnung voneinander getrennt. Die Vorsatzspindel 1 besteht im Wesentlichen aus einer Spindelkopfwelle 3, die mit den Achsen der Planetenräder 4 eines Planetengetriebes drehfest verbunden ist. Im Zentrum zwischen den Planetenrädern 4 befindet sich ein Hohlrad 5 mit der gleichen Zahnung wie die der Planetenräder 4.

Die Antriebseinheit 2 besteht im Wesentlichen aus einem Elektromotor, dessen Rotor 6 auf eine Antriebswelle 7 geschrumpft ist. Der Stator 8 des Elektromotors ist in ein Gehäuse 9 der Antriebseinheit 2 montiert. In dem Gehäuse 9 sind Lagerbüchsen 10 und 11 axial verschiebbar eingebracht. In diesen Lagerbüchsen 10 und 11 ist die Antriebswelle 7 mittels Lager 12, 13 gelagert. Die Lagerbüchsen 10 und 11 sind durch ein nicht dargestelltes Hydrauliksystem axial verschiebbar.

An der der Vorsatzspindel zugewandten Stirnseite der Antriebswelle 7 ist das Sonnenrad 14 des Planetengetriebes angebracht. Das Hohlrad 15 des Planetengetriebes ist mit der Lagerbüchse 10 verbunden. Das zusammen mit der Antriebswelle 7 bzw. der Lagerbüchse 10 verschiebbare Hohlrad 15 ist in Umfangsrichtung durch eine Verzahnung bzw. Verkeilung 16 fixiert.

An der der Vorsatzspindel abgewandten Seite der Antriebswelle 7 befindet sich ein Drehgeber 17, der an die Lagerbüchse 11 angebracht ist. Dieser greift zur Feststellung der Drehgeschwindigkeit bzw. Drehposition der Antriebswelle 7 ein auf der Antriebswelle 7 montiertes Geberrad 18 ab. Wird die Lagerbüchse 11 einschließlich der Antriebswelle 7 axial verschoben, so bewegt sich der Drehgeber 17 entsprechend mit.

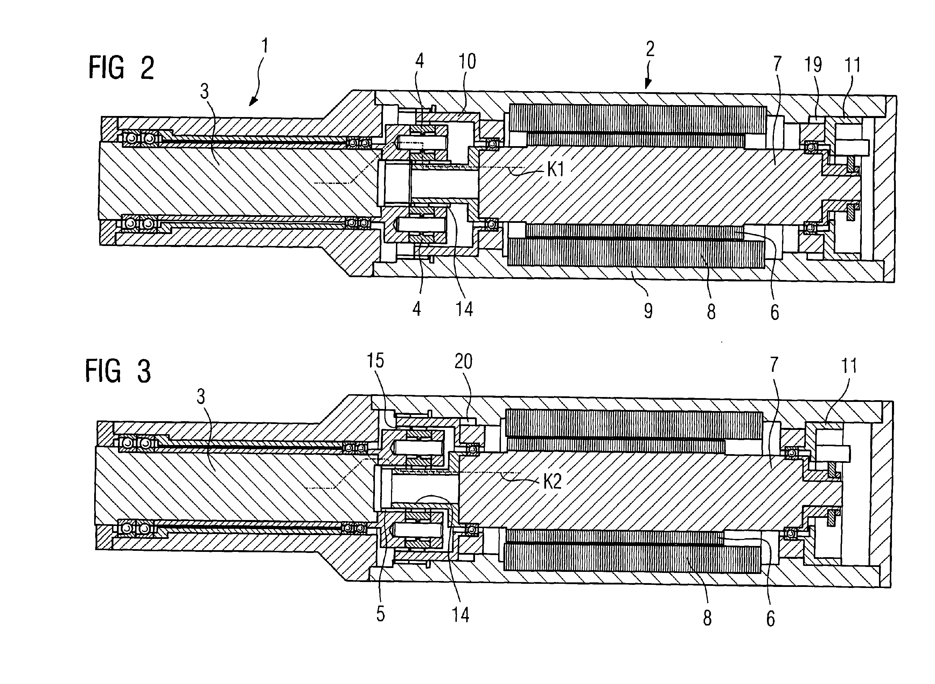

In FIG 2 ist die Vorsatzspindel 1 und die Antriebseinheit 2 im zusammenmontierten Zustand dargestellt. Ein Kolbenraum 19 des hydraulischen Systems ist unter Druck gesetzt. Folglich wird die Lagerbüchse 11 einschließlich der Antriebswelle 7 mit dem daraufgeschrumpften Rotor 6 und der anderen Lagerbüchse 10 innerhalb des Gehäuses 9 der Antriebseinheit 2 in der Zeichnung nach rechts verschoben. Das Sonnenrad 14 greift in die Planetenräder 4, so dass sich der mit gepunkteter Linie in FIG 2 dargestellte Kraftflussweg K1 von der Antriebswelle 7 über das Sonnenrad 14, die Planetenräder 4 zur Spindelkopfwelle 3 ergibt.

Der Übersicht halber sind in FIG 2 nur diejenigen Komponenten mit Bezugszeichen versehen, die für die Erklärung des dargestellten Zustands notwendig sind. Gleiches gilt für die nachfolgend beschriebene FIG 3.

Gemäß FIG 3 ist ein Kolbenraum 20 auf der anderen Seite des Elektromotors unter Druck gesetzt. Als Kolbenfläche dient ein Teil der der Vorsatzspindel zugewandten Lagerbüchse 10. Damit wird diese Lagerbüchse 10 zusammen mit der Antriebswelle 7 einschließlich Rotor 6 und Lagerbüchse 11 nach links zur Vorsatzspindel 1 geschoben. Durch diesen Schiebevorgang tritt das Sonnenrad 14 kraftschlüssig in das Hohlrad 5 der Spindelkopfwelle 3 ein. Das Hohlrad 15 des Planetengetriebes wird hingegen aus den Planetenrädern 4 ausgerückt. Damit verliert das Planetengetriebe seine Wirkung und die Antriebswelle 7 ist unmittelbar mit der Spindelkopfwelle 3 kraftschlüssig verbunden. Dies ist durch den Kraftflussweg K2 in FIG 3 mit der gepunkteten Linie angedeutet.

Trotz des Schiebevorgangs befindet sich der Rotor 6 noch unterhalb des Stators 8, da letzterer entsprechend lang aus gelegt ist. Weiterhin ist der FIG 3 zu entnehmen, dass auch der Drehgeber 17 mit der Antriebswelle 7 nach vorne zur Vorsatzspindel verschoben ist, so dass sich die Drehung der Antriebswelle 7 unverändert abgreifen lässt.

Der Hub beim Verschieben ist vom Getriebe, d.h. der Zahnradbreite, abhängig. Der für das Verschieben bzw. Schalten aufzubringende hydraulische Druck ist gegenüber dem für die axiale Vorspannung der Lagerbüchsen aufzubringenden Druck vernachlässigbar, da nur die Schaltkräfte zu überwinden sind. Das Hydrauliksystem muss daher nicht anders dimensioniert werden. Für die Schaltfunktion sind lediglich zwei Anschläge vorzusehen, zwischen denen die Büchsen 10 und 11 verschiebbar sind. Damit bedarf dieses automatisierte Schalten des Motorspindelgetriebes keiner aufwändigen, zusätzlichen konstruktiven Maßnahmen.

## Patentansprüche

1. Spindelvorrichtung für Werkzeugmaschinen mit
- einer Antriebseinrichtung (2), die eine Antriebswelle (7) umfasst,
- einer Spindelkopfeinrichtung (1), deren Spindelkopfwelle (3) von der Antriebseinrichtung (2) antreibbar ist, zur Aufnahme eines Werkzeugs und
- einer Getriebeeinrichtung (4, 14, 15), die zwischen die Antriebseinrichtung (2) und die Spindelkopfeinrichtung (1) geschaltet ist,
**gekennzeichnet durch**
- eine Verschiebeeinrichtung (19, 20), mit der die Antriebswelle axial derart verschiebbar ist, dass sie in einer ersten Position über die Getriebeeinrichtung (4, 14, 15) mit der Spindelkopfwelle (3) kraftschlüssig und in einer zweiten Position unmittelbar mit der Spindelkopfwelle (3) kraftschlüssig verbunden ist.

2. Spindelvorrichtung nach Anspruch 1, wobei die Getriebeeinrichtung (4, 14, 15) ein Planetengetriebe umfasst.

3. Spindelvorrichtung nach Anspruch 1 oder 2, wobei die Antriebseinrichtung (2) einen Elektromotor umfasst, dessen Rotor (6) auf die Antriebswelle (7) montiert ist.

4. Spindelvorrichtung nach Anspruch 3, wobei der Stator (8) des Elektromotors den Rotor (6) in der ersten und zweiten Position der Antriebswelle (7) vollständig umgibt.

5. Spindelvorrichtung nach einem der Ansprüche 1 bis 4, wobei die Spindelkopfeinrichtung (1) von der Antriebseinrichtung (2) abnehmbar ist.

6. Spindelvorrichtung nach einem der Ansprüche 1 bis 5, wobei die Antriebswelle (7) in Lagerhülsen (10, 11) gelagert ist, die axial verschiebbar sind.

7. Spindelvorrichtung nach einem der Ansprüche 1 bis 6, wobei die Verschiebeeinrichtung (19, 20) nach einem hydraulischen, pneumatischen oder elektromechanischen Prinzip arbeitet.

8. Verfahren zum Betreiben einer Spindelvorrichtung für Werkzeugmaschinen durch
- Antreiben einer Spindelkopfwelle (3) über eine Getriebeeinrichtung (4, 14, 15) durch eine Antriebswelle (7), die sich axial in einer ersten Position befindet,
**gekennzeichnet durch**
- axiales Verschieben der Antriebswelle (7) in eine zweite Position, in der die Spindelkopfwelle (3) mit der Antriebswelle (7) ohne Zwischenschaltung der Getriebeeinrichtung (4, 14, 15) unmittelbar kraftschlüssig verbunden ist, und
- Antreiben der Spindelkopfwelle (3) unmittelbar **durch** die Antriebswelle (7) in der zweiten Position.

9. Verfahren nach Anspruch 8, wobei die Antriebswelle (7) Teil eines Elektromotors ist, dessen Rotor (6) beim Verschieben ebenfalls axial verschoben wird.

10. Verfahren nach Anspruch 8 oder 9, wobei das axiale Verschieben hydraulisch, pneumatisch oder elektromechanisch erfolgt.
